# EUROPÄISCHE PATENTSCHRIFT

(11) **EP 0 419 540 B1**
(45) Veröffentlichungstag und Bekanntmachung des Hinweises auf die Patenterteilung: **31.03.1993**
(21) Anmeldenummer: 89907122.9
(22) Anmeldetag: 13.06.1989
(51) Int. Cl.: B29B 7/74

(54) **MATERIALZUFUHREINRICHTUNG FÜR KUNSTSTOFFVERARBEITUNGSMASCHINEN**
MATERIALS FEED EQUIPMENT FOR PLASTICS-PROCESSING MACHINES
DISPOSITIF D'AMENEE DE MATIERE POUR MACHINES DE MISE EN OEUVRE DE PLASTIQUES

(30) Priorität: 15.06.1988 DE 3820281
(43) Veröffentlichungstag der Anmeldung: 03.04.1991
(73) Patentinhaber: DOLL, Günter, W-7618 Nordrach (DE); Harald Koch Förderanlagen GmbH, D-75223 Niefern-Öschelbronn (DE)
(72) Erfinder: Doll, Günter, W-7618 Nordrach (DE)
(74) Vertreter: Wolf, Eckhard, Dr.-Ing.
(86) Internationale Anmeldenummer: EP8900664
(87) Internationale Veröffentlichungsnummer: WO8912539

(56) Entgegenhaltungen:
- DE-A- 2 247 518
- FR-A- 2 541 974
- GB-A- 2 080 258
- GB-A- 2 133 303
- GB-A- 2 161 090

## Beschreibung

Die Erfindung betrifft eine Materialzuführeinrichtung für Kunststoffverarbeitungsmaschinen mit vorzugsweise mindestens einem Vakuumförderer für körnige oder pulverförmige Mischungskomponenten, mindestens einer Dosiervorrichtung und mindestens einem Mischer.

In Kunststoffverarbeitungsmaschinen und -anlagen müssen in der Regel verschiedene Mischungskomponenten aus verschiedenen Behältnissen zusammengeführt werden. Dies erfolgt in einer Dosier- und Mischstation, die der betreffenden Kunststoffverarbeitungsmaschine vorgeschaltet ist. Als Mischungskomponenten kommen in Betracht:
- Kunststoffgranulat oder -pulver
- Farben und Pigmente
- Stabilisatoren
- Füllstoffe
- Regenerat (gemahlene Kunststoffabfälle)
- Gleitmittel.

Die Mischungskomponenten werden entweder mittelbar über einen Vormischer oder unmittelbar in den Schnekkeneinzug einer als Extrusions-, Spritzguß- oder Blasformmaschine ausgebildeten Kunststoffverarbeitungsmaschine eindosiert.

Bekannte Materialzuführeinrichtungen enthalten regelmäßig ein vorzugsweise als Vakuumfördergerät für Pulver oder Granulat ausgebildetes Fördergerät, einen mit einem Rührwerk zur Auflockerung des Materials ausgestatteten Zwischentrichter und eine nachgeschaltete Dosier- und Mischstation.

Zur volumetrischen Dosierung der Mischungskomponenten wird beispielsweise eine Dosierrolle mit einzelnen Kammern, eine Lochscheibe oder Dosierschnecke verwendet. Dabei macht die volumetrische Dosierung immer eine Eichung erforderlich, um reproduzierbare Ergebnisse zu erhalten. Diese Eichung wird bisher in der Regel manuell durchgeführt, indem eine bei vorgegebener Dosierzeit anfallende Dosiermenge extern ausgewogen wird. Durch Variation der Dosierzeit kann dann in den einzelnen Stationen ein Sollwert manuell eingestellt werden. Üblicherweise ist ansonsten keine Überwachung vorgesehen, die die Funktion des Geräts, also die tatsächliche Dosiermenge oder das Vorhandensein der verschiedenen Mischungskomponenten überwacht. Weiter sind die bisher bekannten Dosiereinheiten ausschließlich mit Wechsel- oder Drehstrommotoren ausgestattet. An jeder Einheit ist daher ein Starkstromanschluß erforderlich. Beim Auswechseln der Komponenten müssen die Starkstromsteckverbindungen an den Zuleitungskabeln gelöst werden. Für die Starkstromversorgung werden außerdem Schaltschütze benötigt, die einen entsprechend großen Platzbedarf aufweisen und einem mechanischen Verschleiß unterliegen. Außerdem ist der Platzbedarf der Starkstrommotoren sehr groß. Als wichtigster Nachteil wird jedoch angesehen, daß mit dem Wechsel- oder Drehstrom die für den Betrieb einer solchen Anlage erforderlichen Meß-, Stuer- und Regelkreise nicht ohne weiteres realisierbar sind, da die Wechselstrom- und Drehstrommotoren eine feste Drehzahl haben und daher eine Variation in der Drehzahl und eine Eichung über die Drehzahl nicht möglich ist. Um Drehzahlanpassungen durchzuführen, müssen dort vielmehr Getriebeteile oder Motoren ausgetauscht werden. Hinzu kommt, daß Wechsel- und Drehstrommotoren nicht gezielt stillsetzbar sind. beim Abschalten tritt aufgrund der Massenkräfte und der Induktivität immer ein gewisser Nachlauf auf. Da auch die in den Vorratsbehältern und den Fülltrichtern vorhandenen Rührwerke mit Wechsel- oder Drehstrommotoren angetrieben werden, kann eine Füllstandsüberwachung mit einfachen Mitteln nicht realisiert werden.

Die Befestigung des Dosierkopfes erfolgt bisher beispielsweise durch Anschrauben, Anflanschen oder mittels zweier Rundführstäbe. Das Anschrauben oder Anflanschen erfordert dabei einen erheblichen Montageaufwand, der sich vor allem bei dem relativ häufig notwendigen Reinigen des Dosierkopfes und des Mischers, wozu der Dosierkopf abgenommen werden muß, nachteilig auswirkt. Die Konstruktion mit den beiden Rundführstäben hat zwar den Vorteil, daß die Dosierstation einfach von ihrer Arbeitsposition wegfahrbar ist. Die Doppelführung erfordert jedoch eine hohe Fertigungsgenauigkeit und ist daher recht aufwendig.

Der Erfindung liegt die Aufgabe zugrunde eine Materialzuführeinrichtung für Kunststoffverarbeitungsmaschinen zu schaffen, deren Baugruppen modular aufgebaut und leicht montierbar, miteinander kombinierbar und gegeneinander austauschbar sind, die einen geringen Platzbedarf erfordern und die einfacher als bisher steuer- und regelbar sind.

Zur Lösung dieser Aufgabe werden die in den Ansprüchen 1 und/oder 9 angegebenen Merkmalskombinationen vorgeschlagen. Weitere vorteilhafte Ausgestaltungen und Weiterbildungen der Erfindung ergeben sich aus den Unteransprüchen.

Die erfindungsgemäße Materialzuführeinrichtung enthält folgende modular miteinander kombinierbare und gegeneinander austauschbare Gruppen von Geräten:
- eine erste Gruppe, bestehend aus einem Vakuumförderer und einem ausgangsseitig an den Vakuumförderer anschließbaren Zwischentrichter, der unmittelbar oder mittelbar über einen an eine weitere Gerätegruppe anschließbaren Mischer mit der Kunststoffverarbeitungsmaschine verbindbar ist,
- eine zweite Gruppe, bestehend aus einem Vakuumförderer und einer eingangsseitig über einen Zwischentrichter oder Zwischenbehälter an den Vakuumförderer anschließbaren Dosiervorrichtung, die über einen an mindestens eine weitere Gerätegruppe anschließbaren Mischer mit der Kunststoffverarbeitungsmaschine verbindbar ist,
- und eine dritte Gruppe, bestehend aus einem Vorratsbehälter für körnige, pulverförmige oder flüssige Mischungskomponenten und einer ausgangsseitig an den Vorratsbehälter anschließbaren Dosiervorrichtung, die über einen an mindestens eine weitere Gerätegruppe anschließbaren Mischer mit der Kunststoffverarbeitungsmaschine verbindbar ist,

wobeidie Antriebs-, Meß- und Steueraggregate der Geräte aller Gruppen über eine zentrale Stromversorgungsanlage und steckbare Versorgungsanschlüsse mit Niedervolt-Gleichspannung versorgt sind.

Die Zwischentrichter oder Zwischenbehälter sind ebenso wie die Vorratsbehälter mit gleichstromgetriebenen Rührwerken ausgestattet, die es gemäß einer bevorzugten Ausgestaltung der Erfindung mit einfachen Mitteln ermöglichen, durch die Bestimmung des auf das Rührwerk übertragenen Drehmoments oder der Stromaufnahme des Motors eine Füllstandsmessung und damit eine Füllstandsüberwachung durchzuführen. Die Drehmomentmessung ist vor allem bei leichtem Dosiergut notwendig, wenn zwischen Leer- und Vollzustand eine Änderung in der Stromaufnahme des Motors nicht eindeutig oder genau genug meßbar ist.

Die Vakuumförderer bzw. Vakuumabscheider mehrerer Gerätegruppen können über je einen Saugstutzen an ein gemeinsames Sauggebläse angeschlossen werden. Zu diesem Zweck ist jeder Vakuumförderer zweckmäßig aus einem mit einem Grobabscheider versehenen, wahlweise mit einem oder mehreren umschaltbaren Materialstutzen bestückten Gehäusemodul und einem mit einem Filter für die Feinabscheidung versehenen, lösbar mit dem Geäusemodul verbunden, wahlweise ein Sauggebläse oder einen Saugstutzen aufweisenden Filtermodul zusammengesetzt. Weiter können die einzelnen Gerätegruppen vorzugsweise im Bereich des Vakuumförderers eine Schnittstelle zur Verbindung mit einer vorzugsweise Computer-gestützten zentralen Steuereinrichtung aufweisen, mit der eine Verbundsteuerung mehrerer, vakuummäßig miteinander gekoppelter Vakuumförderer möglich ist. Jeder Vakuumförderer oder -abscheider weist zu diesem Zweck Rast- und Steckorgane zum lösbaren Aufstecken der Schnittstelle für die Verbundsteuerung oder eines Steueraggregats für eine Direktansteuerung auf.

Gemäß einer bevorzugten Ausgestaltung oder Weiterbildung der Erfindung ist mindestens eine über das Mischergehäuse überstehende, vorzugsweise als Mehrkantschiene ausgebildete Profilschiene zur Aufnahme einer an der Dosiervorrichtung angeordneten, mit einer komplementären Profilführung versehenen Haltevorrichtung sowie ein im Bereich der Profilschiene angeordneter, mit einer zentralen Steuer- und Stromversorgungseinrichtung verbundener, mehrpoliger elektrischer Steckanschluß vorgesehen, welcher Steckanschluß mit einem im Bereich der Haltevorrichtung der Dosiervorrichtung angeordneten komplementären Steckanschluß beim Aufschienen der Haltevorrichtung auf die Profilschiene kuppelbar ist. Vorteilhafterweise sind mindestens vier in gleichen Winkelabständen voneinander horizontal über das Mischergehäuse überstehende, mit elektrischen Steckanschlüssen versehene Profilschienen vorgesehen. Zu diesem Zweck ist das Mischergehäuse an seiner Mantelfläche vorteilhafterweise als Mehrkantprisma ausgebildet, wobei zumindest über jede zweite Mehrkantfläche, vorzugsweise über jede Mehrkantfläche des Gehäusemantels eine mit einem elektrischen Steckanschluß versehene Profilschiene übersteht. Die einzelnen Steckanschlüsse können mit einem Mikroprozessor-gesteuerten Gerät zur Steuerung und Überwachung der Dosiervorrichtung verbunden werden. Mit diesen Vorkehrungen ist ein besonders einfacher und schneller Wechsel der Dosiervorrichtung gewährleistet, der gegebenenfalls auch vollautomatisch mit Hilfe eines Handhabungssystems oder eines Roboters durchgeführt werden kann. Dies ist besonders vorteilhaft, wenn der Dosierkopf zu Reinigungs- und Wartungszwecken abgenommen oder bei einem Farbwechsel gegen einen anderen ausgetauscht werden muß. Weiter kann dieser Vorteil dazu ausgenutzt werden, daß eine für die volumetrische Dosierung bestimmte Dosiervorrichtung, beispielsweise bei einem Materialwechsel, kurzzeitig abgenommen wird, um an einem externen Eichplatz zur gravimetrischen Ermittlung der Eichparameter angeschlossen zu werden. Die an dem Eichplatz ermittelten Eichparameter können dann über eigens hierfür vorgesehene Datenleitungen oder einen Datenträger in eine zentrale Steuerungseinheit eingelesen werden, von der aus die Dosiervorrichtung dann nach Maßgabe der Eichparameter zeit- oder drehzahlgesteuert werden kann. Die Messung, Steuerung und Regelung erfolgt dabei mikroprozessorunterstützt. Dadurch ist eine leichte Anpassung an spätere Entwicklungsstufen möglich.

Die Ansteuerung mehrerer Dosiervorrichtungen über eine zentrale Steuerungs- und Überwachungseinheit bietet den Vorteil, daß die Dosierraten in den einzelnen Dosiervorrichtungen während des Betriebs optimal aufeinander abgestimmt werden können, so daß während der Betriebsdauer eine gleichbleibende Qualität der Erzeugnisse gewährleistet ist. Zugleich kann damit eine alle Dosiervorrichtungen erfassende Funktionsüberwachung durchgeführt werden, die sicherstellt, daß beim Auftreten von Funktionsstörungen oder Füllstandsunterschreitungen in nur einem Gerät die gesamte Gerätegruppe abgeschaltet wird.

Anstelle der Eichung an einem externen Eichplatz kann die Eichung einer volumetrisch arbeitenden Dosiervorrichtung auch an Ort und Stelle vorgenommen werden. Hierzu wird gemäß der Erfindung vorgeschlagen, daß unterhalb der zu Eichzwecken im Abstand vom Mischer auf der Profilschiene angeordneten Dosiervorrichtung eine Eichwaage vorzugsweise an der Profilschiene aufgehängt wird und daß der Abstand zwischen den komplementären Steckanschlüssen durch einen Adapterstecker überbrückt wird. Die Eichwaage kann dabei eine vorzugsweise über den Adapterstecker mit dem mikroprozessorgesteuerten Steuergerät oder einer zentralen Steuereinheit verbindbare Schnittstelle zur Datenübertragung aufweisen. Um dies mit einfachen Mitteln zu ermöglichen, kann die Eichwaage auf einer an der Profilschiene aufhängbaren, vorzugsweise zugleich den Adapterstecker tragenden Plattform angeordnet werden.

Für den Fall, daß eine Direkteinfärbung des Kunststoffmaterials erwünscht ist, weist gemäß einer weiteren vorteilhaften Ausgestaltung der Erfindung jede Dosiervorrichtung Rast- und Steckorgane zum lösbaren Aufstecken eines mit einer eigenen Mikroprozessorsteuerung versehenen Steueraggregats für die Direktansteuerung der betreffenden Dosiervorrichtung auf.

Grundsätzlich ist es möglich, die Dosiervorrichtungen für die volumetrische Dosierung zumindest zum Teil durch solche für die gravimetrische Dosierung zu ersetzen, die zusätzlich eine Meßsonde oder Meßeinrichtung für die Ermittlung von Gewichtsänderungen während des Dosiervorgangs aufweisen. Die Meßsonde kann dabei als zwischen einem Vorratsteil und einem gehäusefesten Teil angeordneter Dehnungsmeßstreifen oder piezoelektrischer Meßfühler ausgebildet sein. Alternativ hierzu kann zwischen einem Vorratsteil und einem gehäusefesten Teil der Dosiervorrichtung auch eine Waage als Meßeinrichtung vorgesehen werden.

Im Falle von beizumischenden Farbkomponenten kann die Dosierrate über eine das aus der Kunststoffverarbeitungsmascnine ausgegebene Endprodukt abtastende Farberkennungssonde nach Maßgabe der Abweichung von einem vorgegebenen Sollwert geregelt werden.

Im folgenden wird die Erfindung anhand der in der Zeichung in schematischer Weise dargestellten Ausführungsbeispiele näher erläutert. Es zeigen
- Fig. 1: ein Schema der zu verschiedenen Baugruppen miteinander verbindbaren Geräte einer Zuführeinrichtung für eine Kunststoffverarbeitungsmaschine;
- Fig. 2: ein Schema einer Kunststoffverarbeitungsanlage, bestehend aus vier Maschinen mit unterschiedlichen Zuführeinrichtungen und einem gemeinsamen Unterdruckgebläse für die einzelnen Vakuumförderabscheider;
- Fig. 3a und b: eine Seitenansicht und eine Stirnseitenansicht einer Dosiervorrichtung mit Eichwaage.

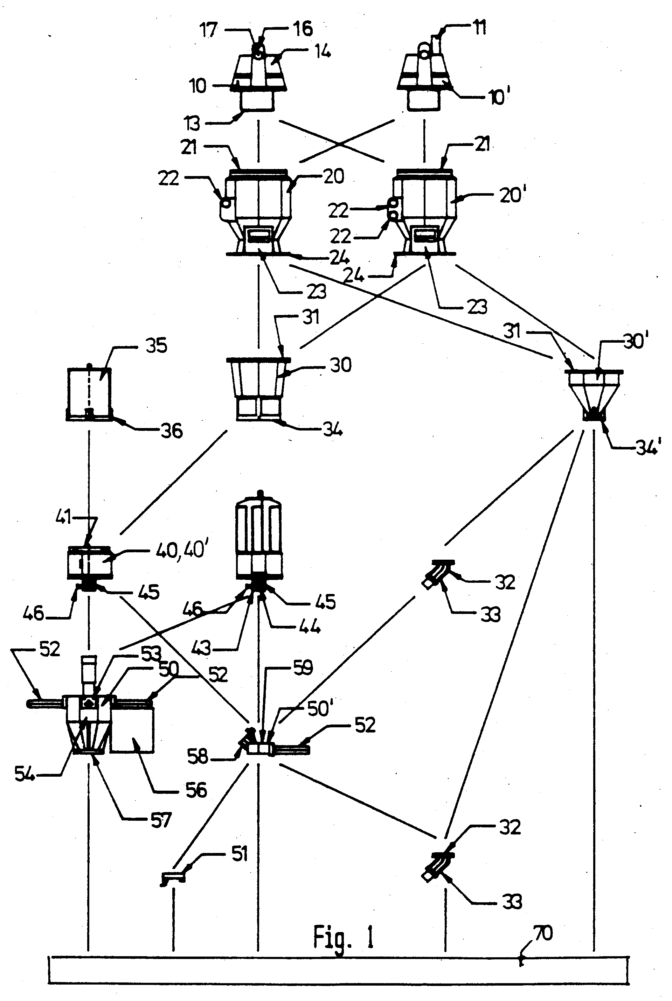

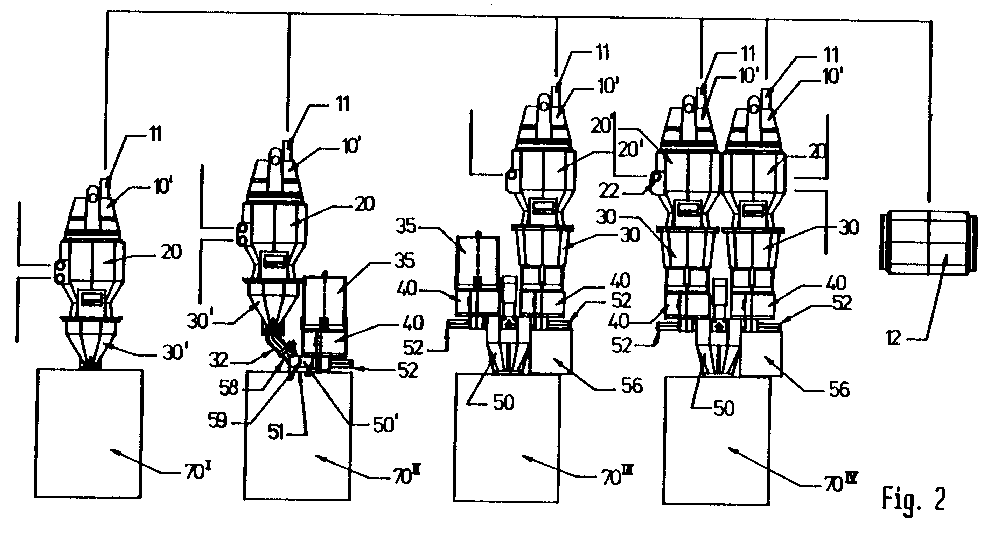

Die in der Zeichnung dargestellten Materialzuführeinrichtungen für Kunststoffverarbeitungsmaschinen bestehen aus einer Mehrzahl standardisierter Module, die baukastenartig zu Modulgruppen kombinierbar und innerhalb dieser Gruppen gegeneinander austauschbar sind. Die einzelnen Module und ihre Kombinierbarkeit mit anderen Modulen sind symbolisch in Fig. 1 dargestellt, während in Fig. 2 verschiedene aus den Modulen zusammengesetzte Baugruppen in einer schematisch angedeuteten Kunststoffverarbeitungsanlage gezeigt sind.

Der Vakuumförderer für körniges oder pulverförmiges Material, insbesondere für Kunststoffgranulat und -pulver spielt in der Materialzuführtechnik für Kunststoffverarbeitungsanlagen eine dominierende Rolle. Abhängig davon, ob gehäusegebundene oder zentrale Sauggebläse verwendet werden, kommen zwei unterschiedliche Filter-Module 10,10′ zum Einsatz, die sich darin unterscheiden, daß im Falle des Filter-Moduls 10 ein Gebläse integriert ist und im Falle des Moduls 10′ ein Saugstutzen 11 für den Anschluß an ein zentrales Sauggebläse 12 vorgesehen ist. Das in der Zeichnung dargestellte Filter-Modul 10,10′ enthält neben dem zylindrisch ausgebildeten Filter 13 für die Feinabschneidung ein Genäuse 14 mit radial nach außen weisenden Luftschlitzen 15 und einen Handgriff 16, in welchem eine Warnlampe 17 integriert ist.

Das Filter-Modul 10 ist von oben her in ein nach oben offendes Fördergehäuse 20,20′ einsetzbar und an diesem über einen Ringflansch 21 anflanschbar. In dem Gehäuse ist ein dem Feinfilter 13 vorgeschalteter, nicht dargestellter Zyklonabscheider für die Grobabscheidung angeordnet. Die beiden Fördergehäuse 20 und 20′ unterscheiden sich durch die Anzahl der Materialstutzen. Das Fördergehäuse 20 ist mit seinen beiden Materialstutzen 22 an zwei verschiedene, nicht dargestellte Materialvorratsbehälter anschließbar, während innerhalb des Fördergehäuses eine nicht dargestellte Vorrichtung zum Umschalten zwischen den beiden Materialstutzen 22 vorgesehen ist. Weiter ist auf das Fördergehäuse 20,20′ eine mikroprozessorgestützte Steuereinrichtung 23 für die Materialüberwachung aufsteckbar, an der zusätzlich eine Schnittstelle für den Anschluß an einen Zentralrechner (PC) für die externe Ansteuerung und Überwachung vorgesehen ist. Insbesondere kann beim Betrieb mehrerer Vakuumförderer mit einem Zentralgebläse über diese Schnittstelle zur Vermeidung einer Überlastung des zentralen Sauggebläses eine gegenseitige Verriegelung ausgelöst werden.

Das Fördergehäuse 20,20′ kann austrittsseitig an zwei unterschiedlichen Typen eines Zwischentrichters, der zugleich als Pufferbehälter dient, von oben her über eine Flanschverbindung 24,31 angeflanscht werden. In dem Zwischentrichter ist ein nicht dargestelltes Rührwerk oder eine mit Druckluft beaufschlagte, mit Mikroporen versehene Sinterplatte für die Auflockerung des darin befindlichen Dosierguts vorgesehen. Der Zwischentrichter 30′ ist für die Direktdosierung über einen Zwischenflansch 32 mit unter 45° abgebogenem Stutzen 33 entweder unmittelbar oder mittelbar über einen Mischkopf 50′ und gegebenenfalls über einen Schieber 51 am nicht dargestellten Schneckeneinzug einer Kunststoffverarbeitungsmaschine 70 anschließbar. Die beiden Zwischentrichter 30 und 30′ unterscheiden sich vor allem hinsichtlich der Abmessungen ihrer austrittsseitigen Stutzen bzw. Flansche 34,34′. Der Austrittstutzen 34 des Zwischentrichters 30 ist dabei so bemessen, daß er einfach auf den Eintrittsstutzen 41 der Dosierstation 40 aufsteckbar ist. Anstelle des Zwischentrichters 30 kann auf den Eintrittsstutzen 41 der Dosierstation auch ein glockenförmig ausgebildeter Vorratsbehälter 35 mit seinem Stutzen 36 aufgesteckt werden. In dem Vorratsbehälter 35 kann ein nicht dargestelltes Rührwerk oder eine mit Druckluft beaufschlagte mikroporige Sinterscheibe zur Auflockerung des darin befindlichen Materials angeordnet sein. Die Glocke 35 ist zweckmäßig durchsichtig ausgebildet, damit der Füllstand von außen beobachtet oder überwacht werden kann. Die in der Zeichnung dargestellte Dosiervorrichtung 40 zur volumetrischen Dosierung von körnigem oder pulverförmigem Material enthält eine mittels eines Gleichstrommotors angetriebene Dosierrolle, deren Kammern das Dosiergut über die Einlaßöffnung 41 von oben her aufnehmen und üder eine Auslaßöffnung abgeben. Die Dosiervorrichtung 40 enthält einen mehrpoligen Steckeranschluß 80 sowie nicht dargestellte Rastvorrichtungen, an denen eine mikroprozessorgestützte Meß- und Steuereinheit für die Direktansteuerung (Direkteinfärbung) abnehmbar anschließbar ist. Außerdem enthält die Dosiervorrichtung eine Haltevorrichtung 43 mit profilführung 44 und elektrischem Steckanschluß 45, die mit der Profilführung 44 auf eine Profilschiene 52 an dem nachgeordneten Vormischer 50 oder an dem Mischkopf 50′ aufschiebbar und mittels einer Klemmschraube 46 festklemmbar ist. An den Profilschienen 52 befindet sich jeweils ein zum Steckanschluß 45 komplementärer Anschluß 53, über den sowohl die Gleichspannungsversorgung der vorgeschalteten Module erfolgt, als auch Meß- und Steuerdaten mit der Dosierstation 40 ausgetauscht werden. Die Profilschienen 52 und die Profilführung 44 haben ein Vierkantprofil, das für eine exakte Ausrichtung der Dosierstation 40 am Vormischer 50 bzw. Mischkopf 50′ sorgt. Der Vormischer 50 hat in seinem oberen Teil die Gestalt eines achteckigen Prismas, an dessen jeweils zweiter Seitenfläche eine Profilschiene 52 radial absteht. Bei dem gezeigten Ausführungsbeispiel sind also vier Profilschienen 52 zur Aufnahme von vier Dosierstationen 40,40′ vorgesehen. Anstelle der Feststoffdosierstation 40 kann an den Führungsschienen auch eine Flüssigdosierstation 40′ mittels einer eine Profilführung 44 aufweisenden Haltevorrichtung 43 angeschlossen werden. Entsprechendes gilt auch für die Kombination mit dem Mischkopf 50′. Der Vormischer 50 enthält einen gleichstrombetriebenen Motor 54 für den Antrieb der nicht dargestellten Mischorgane innerhalb des Vormischers. Weiter sind an dem Vormischer Vorkehrungen für die Befestigung eines mikroprozessorgesteuerten Steuergeräts 56 vorgesehen, das im Falle der Ansteuerung über einen Zentralcomputer einerseits oder über die eine Direktansteuerungseinheit andererseits abgenommen werden kann. Der Vormischer 50 ist mit seinem Ausgangsflansch oder Ausgangsstutzen 57 am Schneckeneinzug der Kunststoffverarbeitungsmaschine 70 anschließbar.

Bei dem in Fig. 2 gezeigten Ausführungsbeispiel ist anhand einer Kunststoffverarbeitungsanlage mit vier Verarbeitungsmaschinen 70′,70˝,70˝,70˝˝ exemplarisch gezeigt, in welcher Weise die in Fig. 1 dargestellten Gerätemodule zu unterschiedlichen Materialzuführgruppen kombiniert werden können. Die verschiedenen Vakuumförderer 10′ sind über je einen Saugstutzen 11 mit einem gemeinsamen Sauggebläse 12 verbunden.

Im Falle der Verarbeitungsmaschine 70′ ist der über zwei Materialstutzen 22 mit Dosivegut beaufschlagte Vakuumförderer 10′,20 über einen Zwischentrichter 30′ zur Direktdosierung unmittelbar an den Schneckeneinzug der Maschine 70′ angeschlossen.

Bei der Maschine 70˝ ist neben der Gerätegruppe 10′, 20′,30′, die über einen Zwischenflansch 32 an den Schrägstutzen 58 des Mischkopfs 50′ angeschlossen ist, ein Farbvorratsbehälter 35 mit Dosiervorrichtung 40 auf die Profilschiene 52 des Mischkopfs 50′ aufgesteckt und an dessen zweite Einlaßöffnung 59 angeschlossen. Der Anschluß an den Schneckeneinzug der Maschine 70˝ erfolgt über einen Schieber 51.

Bei der Kunststoffverarbeitungsmaschine 70′˝ sind über einen Vormischer 50 einerseits eine Gerätegruppe 10′, 20′ als Vakuumförderer, 30 als Zwischentrichter und 40 als Dosierstation, zusätzlich ein Vorratsbehälter 35 mit Dosierstation 40 als Zuführmodule an die Maschine angeschlossen.

Bei der Kunststoffverarbeitungsmaschine 70˝˝ sind schließlich über einen Vormischer 50 zwei Gerätegruppen mit Vakuumförderer 10′,20′, Zwischentrichter 30 und Dosierstation 40 angeschlossen.

Neben den in Fig. 2 gezeigten Kombinationsmöglichkeiten gibt es noch eine Vielzahl weiterer Kombinationsfälle, die aus Fig. 1 einfach herleitbar sind. Insbesondere können an einen Vormischer 50 z.B. vier Modulgruppen für eine entsprechende Anzahl Mischungskomponenten angeschlossen werden. Es ist sogar denkbar, den Vormischer 10 mit sechs oder acht Profilschienen 52 zu versehen, um weitere Modulgruppen anschließen zu können.

Die Dosiereinrichtungen 40 können sowohl für die volumetrische als auch für die gravimetrische Dosierung ausgestattet sein. Im Falle der volumetrischen Dosierung ist die einfache Abtrennbarkeit der mit dem Dosiergerät 44 verbundenen Baugruppe von Vorteil, um an einem externen Eichplatz die Eichparameter für die auf gravimetrischer Grundlage vorgeschriebenen Dosierraten zu bestimmen. Die Eichparameter können hierbei entweder unmittelbar über eine Datenleitung oder mittelbar über Datenträger in einen gerätegebundenen oder zentral angeordneten Rechner für die spätere Ansteuerung der Dosiervorrichtung 40 eingegeben werden.

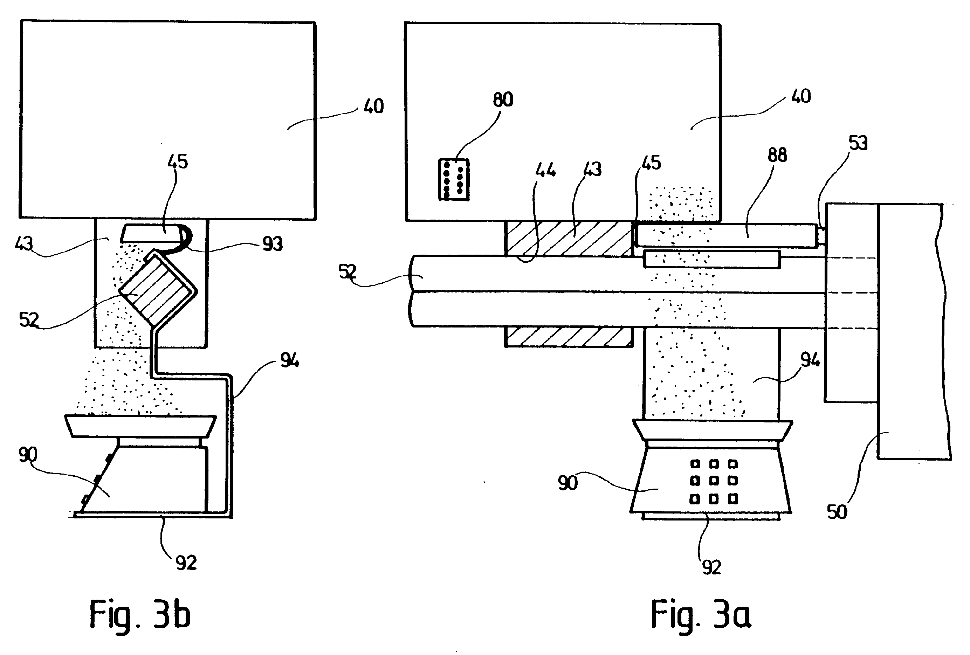

Anstelle der Eichung an einem externen Eichplatz kann mit den in Fig. 3a und b gezeigten Vorkehrungen die Eichung auch bei auf die Profilschiene 52 aufgesteckter Dosiervorrichtung vorgenommen werden. Hierzu muß die Dosiervorrichtung 40 aus ihrer Dosierposition über dem Vormischer 50 gelöst und unter Auftrennen des unmittelbaren Steckkontakts zwischen den Anschlüssen 45 und 53 in die in Fig. 3a gezeigte Eichposition verschoben werden. Die zur Auslösung des Dosiervorgangs und zur Datenübertragung notwendige Verbindung zwischen den Steckkontakten 45 und 53 erfolgt hier über eine Adapterstecker 88. Unter der Austrittsstelle der Dosierstation 40 wird eine Eichwaage 90 angeordnet, die auf einer mittels eines Bügels 94 an der Profilschiene 52 aufgehängten Plattform 92 ruht. Zur Ermittlung der Eichparameter wird das Gewicht der von der Dosiervorrichtung auf die Eichwaage gelangenden Materialmenge bestimmte und in eine Beziehung zu der Anzahl der Umdrehungen der Dosierrolle der Dosiervorrichtung gesetzt. Die Eichparameter werden sodann entweder mittelbar von Hand oder unmittelbar über eine an den Adapterstecker 88 anzuschließende Datenleitung 96 auf die programmierbare Steuereinheit 56 bzw. 84 übertragen. Nach Beendigung des Eichvorgangs wird die Waagenplattform 92 von der Profilschiene 52 abgenommen, der Adapterstecker abgezogen und die Dosierstation 40 unter Herstellung einer unmittelbaren Steckverbindung zwischen den Steckanschlüssen 45,53 in ihre Dosierposition über dem Mischer 50 verschoben.

## Patentansprüche

1. Materialzuführeinrichtung für Kunststoffverarbeitungsmaschinen mit vorzugsweise mindestens einem Vakuumförderer für körnige und pulverförmige Mischungskomponenten, mindestens einer Dosiervorrichtung und mindestens einem Midcher, **gekennzeichnet durch** folgende, miteinander kombinierbare und gegeneinander austauschbare Modulgruppen:
- eine erste Gruppe, bestehend aus einem Vakuumförderer (10;20,20′) oder Vakuumabscheider (10′;20, 20′) und einem ausgangsseitig an diesen anschließbaren Zwischentrichter (30′), der unmittelbar oder mittelbar über einen an mindestens eine weitere Modulgruppe anschließbaren Mischer (50′) mit der Kunststoffverarbeitunasmaschine (70) verbindbar ist;
- eine zweite Gruppe, bestehend aus einem Vakuumförderer (10;20,20′) oder Vakuumabscheider (10′, 20,20′) und einer ausgangsseitig über einen Zwischentrichter (30) an diesen anschließbaren Dosiervorrichtung (40), die über einen an mindestens eine weitere Modulgruppe anschließbaren Mischer (50,50′) mit der Kunststoffverarbeitungsmaschine (70) verbindbar ist;
- eine dritte Gruppe, bestehend aus einem Vorratsbehälter (35) für körnige, pulverförmige oder flüssige Mischungskomponenten und eine ausgangsseitig an den Vorratsbehälter anschließbare oder angeschlossene Dosiervorrichtung (40,40′), die über einen an mindestens eine weitere Modulgruppe anschließbaren Mischer (50,50′) mit der Kunststoffverarbeitungsmaschine verbindbar ist,
wobei die Antriebs-, Meß- und Steueraggregate der Module aller Modulgruppen über eine zentrale Stromversorgungsanlage und steckbare Versorgungsanschlüsse mit Niedervolt-Gleichspannung versorgt sind.

2. Einrichtung nach Anspruch 1, **dadurch gekennzeichnet,** daß der Zwischentrichter (30,30′) mit einem Gleichstrommotor-getriebenen Rührwerk ausgestattet ist.

3. Einrichtung nach Anspruch 1 oder 2, **gekennzeichnet durch** eine zentrale mikroprozessorgestützte Steuerungs-, Regelungs- und Überwachungseinheit, an die die Module der verschiedenen Gerätegruppen über kabellose Steckanschlüsse anschließbar sind.

4. Einrichtung nach einem der Ansprüche 1 bis 3, **dadurch gekennzeichnet**, daß der Vakuumförderer aus einem mit einem Grobabscheider versehenen, wahlweise mit einem oder mit mehreren umschaltbaren Materialstutzen (22) bestückten Gehäusemodul (20,20′) und einem mit einem Filter (13) für die Feinabscheidung versehenen, lösbar mit dem Gehäusemodul (20,20′) verbundenen, wahlweise ein Sauggebläse oder einen Saugstutzen (11) aufweisenden Filtermodul (10,10′) zusammengesetzt ist.

5. Einrichtung nach einem der Ansprüche 1 bis 4, **dadurch gekennzeichnet,** daß die Materialförderer (10′;20,20′) mehrerer Modulgruppen über je einen Saugstutzen (11) an einem gemeinsamen Sauggebläse (12) anschließbar sind

6. Einrichtung nach einem der Ansprüche 1 bis 5, **dadurch gekennzeichnet,** daß die einzelnen Modulgruppen vorzugsweise im Bereich der Vakuumförderer (10′;20,20′) eine Schnittstelle (23) zur Verbindung mit einer rechnergestützten zentralen Steuereinrichtung zur Verbundsteuerung mehrerer vakuummäßig miteinander gekoppelter Vakuumförderer aufweisen.

7. Einrichtung nach einem der Ansprüche 1 bis 6, **dadurch gekennzeichnet**, daß jeder Vakuumförderer oder -abscheider (10,10′;20,20′) Rast- und Steckorgane zum lösbaren Aufstecken und galvanischen Ankuppeln eines Steueraggregats für die Direktansteuerung aufweist.

8. Einrichtung nach einem der Ansprüche 1 bis 7, **dadurch gekennzeichnet**, daß in den Vorratsbehältern (35), Zwischentrichtern (30,30′) und/oder Mischern (50) Füllstandsregler oder Überwachungseinrichtungen vorgesehen sind, und daß bei der Füllstandsmessung die Stromaufnahme oder die Drehmomentaufnahme an den Gleichstrommotor-getriebenen Mischorganen als Maß für den augenblicklichen Füllstand verwendet wird.

9. Materialzuführeinrichtung für Kunststoffverarbeitungsmaschinen mit mindestens einer Dosiervorrichtung für körnige, pulverförmige oder flüssige Mischungskomponenten und mit mindestens einem über die Dosiervorrichtung mit einer der Mischunoskomponentem beschickbaren, in einem Gehäuse angeordneten Mischer, insbesondere nach einem der Ansprüche 1 bis 8, **gekennzeichnet durch** mindestens eine über das Mischergehäuse überstehende, vorzugsweise als Mehrkantschiene ausgebildete Profilschiene (52) zur Aufnahme einer an der Dosiervorrichung (40) angeordneten, mit einer komplementären Profilführung (44) versehenen Haltevorrichtung (43), und einem im Bereich der Profilschiene (52) angeordneten, mit einer zentralen Steuer- und Stromversorungseinrichtung (56) verbundenen, mehrpoligen elektrischen Steckanschluß (53), mit dem ein im Bereich der Haltevorrichtung (43) der Dosiervorrichtung (40,40′) angeordneter komplementärer Steckanschluß (45) beim Aufschieben der Haltevorrichtung (43) auf der Profilschiene (52) kuppelbar ist.

10. Einrichtung nach Anspruch 9, **gekennzeichnet durch** mindestens vier in gleichen Winkelabständen voneinander horizontal über das Mischergehäuse (50) überstehende, mit elektrischen Steckanschlüssen (53) versehene Profilschienen (52).

11. Einrichtung nach einem der Ansprüche 9 oder 10, **dadurch gekennzeichnet,** daß der irischer (50) durch ein an seiner Mantelfläche ein Mehrkantprisma bildendes Gehäuse begrenzt ist und daß zumindest über jede zweite Mehrkantfläche, vorzugsweise über jede Mehrkantfläche des Gehäusemantels eine mit einem elektrischen Steckanschluß (53) versehene Profilschiene (52) übersteht.

12. Einrichtung nach einem der Ansprüche 9 bis 11, **dadurch gekennzeichnet,** daß die Steckanschlüsse (53) mit einem programmierbaren Steuergerät (56) zur Steuerung und Überwachung mehrerer Dosiervorrichtungen (40,40′) verbindbar sind.

13. Einrichtung nach einem der Ansprüche 9 bis 12, **dadurch gekennzeichnet**, daß unterhalb der zu Eichzwecken im Abstand vom irischer (50,50′) auf der Profilschiene angeordneten Dosiervorrichtung (40) eine Eichwaage (90) vorzugsweise an der Profilschiene (52) aufhängbar ist, und daß die komplementären Steckanschlüsse (45,53) durch einen den Abstandsbereich überbrückenden Adapterstecker (88) verbindbar sind.

14. Einrichtung nach Anspruch 13,**dadurch gekennzeichnet,** daß die Eichwaage (90) eine vorzugsweise über den Adapterstecker (88) mit dem programmierbaren Steuergerät (56,84) oder einer zentralen Steuereinheit verbindbare Schnittstelle zur Datenübergabe aufweist.

15. Einrichtung nach Anspruch 13 oder 14,**dadurch gekennzeichnet**, daß die Eichwaage (90) auf einer an der Profilschiene (52) aufhängbaren, vorzugsweise den Adapterstecker (88) tragenden Plattform (92) angeordnet ist.

16. Einrichtung nach einem der Ansprüche 9 bis 15, **dadurch gekennzeichnet,** daß die Dosiervorrichtung (40,40′) Rast- und Steckorgane (82,80) zum lösbaren Aufstecken einer Meß- und Steuereinheit (84) für die Direktansteuerung aufweist.

17. Einrichtung nach einem der Ansprüche 1 bis 16, **dadurch gekennzeichnet**, daß die für eine volumetrische Dosierung ausgelegte Dosiervorrichtung (40,40′) an einen externen Eichplatz zur gravimetrischen Ermittlung der Eichparameter anschließbar ist.

18. Einrichtung nach Anspruch 17, **dadurch gekennzeichnet**, daß die am Eichplatz ermittelten Eichparameter über Datenleitungen oder Datenträger in eine rechnergestützte Zentraleinheit zur Ansteuerung der Dosiervorrichtungen (40,40′) einlesbar sind.

19. Einrichtung nach einem der Ansprüche 1 bis 13, **dadurch gekennzeichnet,** daß zumindest ein Teil der Dosiervorrichtungen (40,40′) zur gravimetrischen Dosierung ausgelegt ist und eine Meßsonde oder Meßeinrichtung für die Bestimmung von Gewichtsänderungen aufweist.

20. Einrichtung nach Anspruch 19, **dadurch gekennzeichnet,** daß die Meßsonde mindestens einen zwischen einem Vorratsteil und einem gehäusefesten Teil angeordneten Dehnungsmeßstreifen oder piezoelektrischen Meßfühler aufweist.

21. Materialzuführeinrichtung nach Anspruch 19, **dadurch gekennzeichnet,** daß die Meßeinrichtung als zwischen dem Vorratsteil und einem gehäusefesten Teil angeordnete Waage ausgebildet ist.

22. Einrichtung nach einem der Ansprüche 1 bis 21, **dadurch gekennzeichnet,** daß die Dosierrate mindestens einer Farbkomponente an der zugehörigen Dosiervorrichtung (40,40′) über eine das aus der Kunststoffverarbeitungsmaschine (70) ausgegebene Endprodukt abtastende Farberkennungssonde nach Maßgabe der Abweichung von einem vorgegebenen Sollwert regelbar ist.

## Claims

1. Materials feed equipment for plastics processing machines with preferably at least one vacuum conveyor for granular and powdery mixing components, at least one metering device and at least one mixer, **characterized by** the following modular groups combinable with each other and interchangeable:
- a first group, consisting of a vacuum conveyor (10; 20, 20′) or vacuum separator (10′; 20,20′) and an intermediate hopper (30′) connectable to this on the output side, which is directly or indirectly connectable to the plastics processing machine (70) via a mixer (50′) connectable to at least one further modular group;
- a second group, consisting of a vacuum conveyor (10;20,20′) or vacuum separator (10′, 20,20′) and a metering device (40) connectable on the output side via an intermediate hopper (30) to the latter, which is connectable to the plastics processing machine (70) via a mixer (50,50′) connectable to at least one further modular group;
- a third group, consisting of a stock container (35) for granular, powdery or liquid mixing components and a metering device (40, 40′) connectable or connected on the output side to the stock container, which is connectable via a mixer (50, 50′) connectable to at lesat one further modular group to the plastics processing machine,
where the drive, measuring and control units of the modules of all modular groups are supplied via a central power supply installation and plug-in supply connections with low d.c. voltage.

2. Equipment according to Claim 1, **characterized in that** the intermediate hopper (30, 30′) is fitted with an agitator driven by a d.c. motor.

3. Equipment according to Claim 1 or 2, **characterized by** a central microprocessor-supported control, regulation and monitoring unit to which the modules of the various device groups are connectable via cableless plug-in connections.

4. Equipment according to one of Claims 1 to 3, **characterized in that** the vacuum conveyor is made up of a housing module (20, 20′) provided with a coarse separator, fitted optionally with one or more changeover material connectors (22), and a filter module (10,10′) provided with a filter (13) for fine separation, detachably connected to the housing module (20, 20′), optionally exhibiting an extraction fan or a suction connector (11).

5. Equipment according to one of Claims 1 to 4, **characterized in that** the material conveyors (10′; 20,20′) of several modular groups are connectable via one suction connector (11) in each case to a common extraction fan (12).

6. Equipment according to one of Claims 1 to 5, **characterized in that** the individual modular groups exhibit, preferably in the area of the vacuum conveyor (10′; 20,20′), an interface (23) for connecting a computer-aided central control device for the composite control of several vacuum conveyors coupled in vacuum to each other.

7. Equipment according to one of Claims 1 to 6, **characterized in that** each vacuum conveyor or separator (10,10′;20,20′) exhibits latch and plug-in components for separable insertion and galvanic coupling of a control unit for direct drive.

8. Equipment according to one of Claims 1 to 7, characterized in that in the stock containers (35), intermediate hoppers (30,30′) and/or mixers (50) level regulators or monitoring devices are provided, and that in level measurement the power consumption or the torque uptake on the d.c. motor-driven mixing components is used as a measure for the current level.

9. Materials feed equipment for plastics processing machines with at least one metering device for granular, powdery or liquid mixing components and with at least one mixer loadable with one of the mixing components and arranged in a housing, particularly according to one of Claims 1 to 8, **characterized by** at least one profile rail (52) projecting beyond the mixer housing and preferably formed as a multi-edge rail, for accommodating a holding device arranged on the metering device (40) and provided with a complementary profile guide (44), and a multi-pole, electrical plug-in connection (53) arranged in the area of the profile rail (52) and connected to a central control and power supply device (56), with which a complementary plug-in connection (45) arranged in the area of the holding device (43) of the metering device (40,40′) can be coupled when pushing the holding device (43) onto the profile rail (52).

10. Equipment according to Claim 9, **characterized by** at least four profile rails (52) projecting at equal angular distances from each other horizontally beyond the mixer housing (50) and provided with electrical plug-in connections (53).

11. Equipment according to one of Claims 9 or 10, **characterized in that** the mixer (50) is limited by a housing forming a multi-edge prism on its jacket surface an a that a profile rail (52) provided with an electrical plug-in connection (53) projects at least beyond every second multi-edge surface, preferably beyond each multi-edge surface of the housing jacket.

12. Equipment according to one of Claims 3 to 11, **characterized in that** the plug-in connections (53) are connectable to a programmable controller (56) for controlling and monitoring several metering devices (40,40′).

13. Equipment according to one of Claims 9 to 12, **characterized in that** below the metering device (40) arranged for calibration purposes at a distance from the mixer (50,50′) on the profile rail, a calibration balance (90) can be suspended, preferably on the profile rail (52), and that the complementary plug-in connections (45,53) are connectable by an adapter plug (88) bridging the distance area.

14. Equipment according to Claim 13, **characterized in that** the calibration balance (90) exhibits an interface for data transfer connectable preferably via the adapter plug (88) to the programmable controller (56, 84) or a central control unit.

15. Equipment according to Claim 13 or 14, **characterized in that** the calibration balance (90) is arranged on a platform (92) suspendable on the profile rail (52) and preferably carrying the adapter plug (88).

16. Equipment according to one of Claims 9 to 15,**characterized in that** the metering device (40,40′) exhibits latch and plug-in components (32, 80) for detachable insertion of a measuring control unit (84) for the direct drive.

17. Equipment according to one of Claims 1 to 16, **characterized in that** the metering device (40,40′) designed for volumetric metering is connectable to an external calibration site for gravimetric determination of the calibration parameters.

18. Equipment according to Claim 17, **characterized in that** the calibration parameters determined at the calibration site can be input via data lines or data media in a computer-aided central processing unit for driving the metering devices (40,40′).

19. Device according to one of Claims 1 to 13, **characterized in that** at least one part of the metering devices (40,40′) is designed for gravimetric metering and a measuring probe or measuring device for determining weight changes.

20. Equipment according to Claim 19, **characterized in that** the measuring probe has at least one wire strain gauge or piezoelectric measuring sensor arranged between a stock part and a part fixed to the housing.

21. Materials feeds equipment according to Claim 19, **characterized in that** the measuring device is formed as a balance arranged between the stock part and a part fixed to the housing.

22. Equipment according to one of Claims 1 to 21, **characterized in that** the metering rate of at least one dye component on the relevant metering device (40,40′) is controllable via a dye recognition probe scanning the end product output from the plastics processing machine (70) according to the deviation from a preset ideal value.

## Revendications

1. Dispositif d'amenée de matière pour machines de transformation de matières plastiques, comprenant de préférence au moins un transporteur à vide pour des constituants de mélange granuleux ou pulvérulents, au moins un dispositif de dosage et au moins un mélangeur, **caractérisé en ce** qu'il comprend les groupes modulaires suivants combinables et interchangeables :
- un premier groupe, composé d'un transporteur à vide (10; 20, 20′) ou séparateur à vide (10′ ; 20, 20′) et d'une trémie intermédiaire (30′) qui peut être raccordée à la sortie de ce dernier et couplée directement ou indirectement, par l'intermédiaire d'un mélangeur (50′) qui peut être raccordé à au moins un groupe modulaire supplémentaire, avec la machine de transformation de matières plastiques (70);
- un second groupe, composé d'un transporteur à vide (10; 20, 20′) ou séparateur à vide (10′, 20, 20′) et d'un dispositif de dosage (40) qui peut être raccordé à la sortie de ce dernier par l'intermédiaire d'une trémie intermédiaire (30) et couplé avec la machine de transformation de matières plastiques (70) par l'intermédiaire d'un mélangeur (50, 50′) lequel peut être raccordé à au moins un groupe modulaire supplémentaire;
- un troisième groupe, composé d'un réservoir de stockage (35) pour des constituants de mélange granuleux, pulvérulents ou liquides et un dispositif de dosage (40, 40′) qui peut être ou est raccordé à la sortie du réservoir de stockage et qui peut être couplé avec la machine de transformation de matières plastiques par l'intermédiaire d'un mélangeur (50, 50′) lequel peut être raccordé à au moins un groupe modulaire supplémentaire.
les systèmes d'entraînement, de mesure et de commande des modules de tous les groupes modulaires étant alimentés en basse tension continue par l'intermédiaire d'un groupe d'alimentation central et de connecteurs d'alimentation enfichables.

2. Dispositif selon la revendication 1, caractérisé en ce que la trémie intermédiaire (30, 30′) est équipée d'un agitateur entraîné par un moteur à courant continu.

3. Dispositif selon l'une des revendications 1 ou 2, caractérisé en ce qu'il comprend une unité centrale de commande, de régulation et de surveillance assistée par microprocesseur, à laquelle peuvent être raccordés les modules des différents groupes d'appareils par l'intermédiaire de connecteurs enfichables sans câble.

4. Dispositif selon l'une des revendications 1 à 3, caractérisé en ce que le transporteur à vide est assemblé à partir d'un module de carter (20, 20′) équipé d'un séparateur primaire et muni, au choix, d'une ou de plusieurs tubulures de matière (22) commutables, et d'un module de filtre (10, 10′) équipé d'un filtre (13) pour la séparation fine, couplé de manière amovible avec le module de carter (20, 20′) et comportant, au choix, un ventilateur extracteur ou une tubulure d'aspiration (11).

5. Dispositif selon l'une des revendications 1 à 4, caractérisé en ce que les transporteurs de matières (10′; 20, 20′) de plusieurs groupes modulaires peuvent être raccordés par l'intermédiaire de respectivement une tubulure d'aspiration (11) à un ventilateur extracteur commun (12).

6. Dispositif selon l'une des revendications 1 à 5, caractérisé en ce que les différents groupes modulaires comportent, de préférence dans la région des transporteurs à vide (10′; 20. 20′), une interface (23) pour la liaison avec une unité de commande centrale assistée par ordinateur pour la commande combinée de plusieurs transporteurs à vide couplés les uns avec les autres en ce qui concerne le vide.

7. Dispositif selon l'une des revendications 1 à 6, caractérisé en ce que chaque transporteur ou séparateur à vide (10, 10′: 20, 20′) comprend des organes d'arrêt ou à fiche pour l'enfichage amovible et le couplage direct d'un groupe de commande pour la commande directe.

8. Dispositif selon l'une des revendications 1 à 7, caractérisé en ce que dans les réservoirs de stockage (35), les trémies intermédiaires (30, 30′) et/ou les mélangeurs (50), sont prévus des régulateurs de niveau ou des dispositifs de surveillance, et que lors de la mesure du niveau de remplissage, la consommation de courant ou le couple de rotation appliqué aux organes mélangeurs entraînés par moteur à courant continu est utilisé comme critère pour le niveau de remplissage momentané.

9. Dispositif d'amenée de matière pour des machines de transformation de matières plastiques, comprenant au moins un dispositif de dosage pour des constituants de mélange granuleux, pulvérulents ou liquides et au moins un mélangeur, notamment selon l'une des revendications 1 à 8, disposé dans un carter et pouvant être alimenté par l'intermédiaire du dispositif de dosage avec l'un des constituants de mélange, caractérisé en ce qu'il comprend au moins un rail profilé (52) dépassant du carter du mélangeur et conformé de préférence en rail polygonal qui est destiné à recevoir un dispositif de retenue (43) monté sur le dispositif de dosage (40) et muni d'un guidage profilé (44) complémentaire, et un connecteur électrique multibroche enfichable (53) disposé dans la région du rail profilé (52) et relié au système de commande et d'alimentation central (56), avec lequel peut être couplé, lors de l'engagement du dispositif de retenue (43) sur le rail profilé (52), un connecteur enfichable (45) complémentaire disposé dans la région du dispositif de retenue (43) du dispositif de dosage (40, 40′).

10. Dispositif selon la revendication 9, caractérisé en ce qu'il comprend au moins quatre rails profilés (52) dépassant horizontalement, à des distances angulaires égales, du carter (50) du mélangeur et munis de connecteurs électriques enfichables (53).

11. Dispositif selon l'une des revendications 9 ou 10, caractérisé en ce que le mélangeur (50) est délimité par un carter qui forme sur sa surface extérieure un prisme polygonal, et que de chaque deuxième côté du polygone, de préférence de chaque côté du polygone de l'enveloppe du carter, dépasse un rail profilé (52) muni d'un connecteur électrique enfichable (53).

12. Dispositif selon l'une des revendications 9 à 11, caractérisé en ce que les connecteurs enfichables (53) peuvent être reliés à un appareil de commande (56) programmable pour la commande et la surveillance de plusieurs dispositifs de dosage (40, 40′).

13. Dispositif selon l'une des revendications 9 à 12, caractérisé en ce que, au-dessous du dispositif de dosage (40) monté sur le rail profilé, à distance du mélangeur (50, 50′), une balance d'étalonnage (90) peut être accrochée, de préférence au rail profilé (52), et que les connecteurs enfichables complémentaires (45, 53) peuvent être reliés par un adaptateur (88) qui couvre l' écartement entre lesdits connecteurs.

14. Dispositif selon la revendication 13, caractérisé en ce que la balance d'étalonnage (90) comprend une interface pour le transfert des données qui peut être reliée, de préférence par l'intermédiaire de l'adaptateur (88), à l'appareil de commande (56, 84) programmable ou à une unité de commande centrale.

15. Dispositif selon l'une des revendications 13 ou 14, caractérisé en ce que la balance d'étalonnage (90) est montée sur une plate-forme (92) qui peut être accrochée au rail profilé (52) et porte de préférence l'adaptateur (88).

16. Dispositif selon l'une des revendications 9 à 15, caractérisé en ce que le dispositif de dosage (40, 40′) comporte des organes d'arrêt et d'enfichage (32, 80) pour l'enfichage amovible d'une unité de mesure et de commande (84) pour la commande directe.

17. Dispositif selon l'une des revendications 1 à 16, caractérisé en ce que le dispositif de dosage (40, 40′) conçu pour un dosage volumétrique peut être raccordé à un poste d'étalonnage externe pour la détermination gravimétrique des paramètres d'étalonnage.

18. Dispositif selon la revendicaiion 17, caractérisé en ce que les paramètres d'étalonnage déterminés au poste d'étalonnage peuvent être introduits, par l'intermédiaire de lignes de transmission de données ou de supports de données, dans une unité centrale assistée par ordinateur pour la commande des dispositifs de dosage (40, 40′).

19. Dispositif selon l'une des revendications 1 à 13, caractérisé en ce qu'au moins une partie des dispositifs de dosage (40, 40′) sont conçus pour le dosage gravimétrique et comportent une sonde de mesure ou un dispositif de mesure pour la détermination des variations de poids.

20. Dispositif selon la revendication 19, caractérisé en ce que la sonde de mesure comprend au moins une jauge extensometrique ou un capteur de mesure piezoélectrique installe entre une section de stockage et une section solidaire du carter.

21. Dispositif d'amenée de matière selon la revendication 19, caractérisé en ce que le dispositif de mesure est réalisé sous la forme d'une balance installée entre la section de stockage et une section solidaire du carter.

22. Dispositif selon l'une des revendications 1 à 21, caractérisé en ce que le débit d'au moins une composante chromatique peut être réglé sur le dispositif de dosage (40, 40′) associé en fonction de l'écart par rapport à une valeur de consigne prédéterminée, par l'intermédiaire d'une sonde chromosensible qui explore le produit fini sortant de la machine de transformation de matières plastiques (70).
